# EUROPEAN PATENT APPLICATION

(11) **EP 4 543 056 A1**
(43) Date of publication of application: **23.04.2025**
(21) Application number: 23834925.2
(22) Date of filing: 06.07.2023
(51) Int. Cl.: H04W 4/16

(54) **VIDEO CALL CONTROL METHOD, COMMUNICATION DEVICE AND STORAGE MEDIUM**

(30) Priority: 08.07.2022 CN 202210800411
(71) Applicant: ZTE Corporation, Shenzhen, Guangdong 518057 (CN)
(72) Inventor: XIE, Zhenbin, Shenzhen, Guangdong 518057 (CN)
(74) Representative: Savi, Massimiliano
(86) International application number: PCT/CN2023/106132
(87) International publication number: WO 2024/008159

(57) **Abstract**

The embodiments of the present application provide a video call control method, a communication device and a storage medium. The method comprises the following steps: acquiring a video call connection request of a first terminal that is sent by a call session control function unit (S 100); sending the video call connection request to a virtual human service unit, and acquiring a virtual human image, which is sent by the virtual human service unit and corresponds to the first terminal (S200); performing replacement processing on a target object in a video according to the virtual human image to obtain virtual human video data (S300); and sending the virtual human video data to a base station unit, so as to send the virtual human video data to a second terminal by means of the base station unit (S400).

## Description

### CROSS-REFERENCE TO RELATED APPLICATION

This application is filed on the basis of Chinese patent application No. 202210800411.3 filed July 08, 2022, and claims priority of the Chinese patent application, the disclosure of which is incorporated herein by reference in its entirety.

### TECHNICAL FIELD

Embodiments of the present disclosure relate to, but are not limited to, the field of communications, and particularly to a video call control method, a communication device, and a storage medium.

### BACKGROUND

Currently, calls made by 5G users involve passive response interactions, lacking guidance and perception of user requirements. Additionally, the system design is complex, the operational process is cumbersome, and the prompts are monotonous, thereby raising the obstacle for the development of self-service interaction services. During a 5G call, there is a lack of vividness in the conversation between both parties. Even if a new system customization feature is developed to enhance user vividness, users will still need to learn and understand this new feature after its development in order to master the use of the new product and new feature. This can create psychological barriers for users, thereby reducing their interest in experiencing new products, which is not conducive to the promotion and use of the services.

### SUMMARY

The following is a summary of the subject matters described in detail herein. This summary is not intended to limit the scope of protection of the claims.

According to the embodiments of the present disclosure, a video call control method, a communication device, and a storage medium are disclosed.

In accordance with a first aspect of the present disclosure, an embodiment provides a video call control method, which is performed by a Voice over New Radio (VoNR+) platform set up within a communication network. The VoNR+ platform is respectively connected to a virtual human service unit, a call session control function unit and a base station unit in the communication network. The method includes: acquiring a video call connection request of a first terminal device sent by the call session control function unit; sending the video call connection request to the virtual human service unit, and acquiring a virtual human image corresponding to the first terminal device sent by the virtual human service unit; performing a replacement processing on a target object in a video based on the virtual human image to obtain virtual human video data; and sending the virtual human video data to the base station unit, so as to send the virtual human video data to a second terminal device via the base station unit.

In accordance with a second aspect of the present disclosure, an embodiment provides a video call control method, which is performed by a first terminal device connected to a communication network including a VoNR+ platform, a virtual human service unit, a call session control function unit, a first base station unit and a second base station unit. The virtual human service unit, the call session control function unit, the first base station unit and the second base station unit are connected to the VoNR+ platform. The method includes: sending, to the base station unit, a video call connection request for a video call with a second terminal device, in turn sending the video call connection request to the virtual human service unit sequentially via the base station unit, the call session control function unit, and the VoNR+ platform, so that the VoNR+ platform acquires a virtual human image corresponding to the first terminal device via the virtual human service unit, performs a replacement processing on a target object in a video based on the virtual human image to obtain virtual human video data, and sends the virtual human video data to the second terminal device via the base station unit; and acquiring the virtual human video data sent by the first base station unit.

In accordance with a third aspect of the present disclosure, an embodiment provides a communication device, including: a memory, a processor, and a computer program stored on the memory and executable by the processor, where the computer program, when executed by the processor, causes the processor to implement the video call control method of the first aspect, or to implement the video call control method of the second aspect.

In accordance with a fourth aspect of the present disclosure, an embodiment provides a computer-readable storage medium storing computer-executable instructions, which is configured to implement the video call control method of the first aspect, or to implement the video call control method of the second aspect.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims, and the accompanying drawings.

### BRIEF DESCRIPTION OF DRAWINGS

FIG. 1 is a schematic diagram of an overall networking architecture for executing a video call control method according to an embodiment of the present disclosure;
FIG. 2 is a schematic diagram of a network composed of network elements for executing a video call control method according to another embodiment of the present disclosure;
FIG. 3 is a flowchart of a video call control method applied to a first node according to an embodiment of the present disclosure;
FIG. 4 is a schematic flow diagram of network access and image replacement generated by a video call control method according to an embodiment of the present disclosure;
FIG. 5 is a flowchart of a video call control method according to another embodiment of the present disclosure;
FIG. 6 is a flowchart of a video call control method according to another embodiment of the present disclosure;
FIG. 7 is a schematic flow diagram of internal processing of a VoNR+ platform that executes a video call control method according to an embodiment of the present disclosure;
FIG. 8 is a flowchart of a video call control method according to another embodiment of the present disclosure;
FIG. 9 is a schematic diagram of implementing a static virtual human service in a video call control method according to an embodiment of the present disclosure;
FIG. 10 is a schematic diagram of implementing a dynamic virtual human service in a video call control method according to an embodiment of the present disclosure; and
FIG. 11 is a schematic diagram of a scenario in which a virtual human service call is implemented between a DC terminal device and a non-DC terminal device in a video call control method according to an embodiment of the present disclosure.

### DETAILED DESCRIPTION

Objectives, technical schemes and advantages of the present disclosure will be clearer from a detailed description of embodiments of the present disclosure in conjunction with the accompanying drawings. It should be understood that the embodiments described herein are only intended to explain the present disclosure, and shall not be construed to limit the present disclosure.

It should be noted that although a functional module division is shown in a schematic diagram of an apparatus and a logical order is shown in a flowchart, the steps shown or described may be executed, in some cases, with a different module division from that of the apparatus or in a different order from that in the flowchart. The terms such as "first" and "second" in the description, claims or above-mentioned drawings are intended to distinguish between similar objects and are not necessarily to describe a specific order or sequence.

Embodiments of the present disclosure provide a video call control method, a communication device, and a storage medium. The video call control method includes: acquiring a video call connection request of a first terminal device sent by a call session control function unit; sending the video call connection request to a virtual human service unit, and acquiring a virtual human image corresponding to the first terminal device sent by the virtual human service unit; performing a replacement processing on a target object in a video based on the virtual human image to obtain virtual human video data; and sending the virtual human video data to a base station unit, so as to send the virtual human video data to a second terminal device via the base station unit. In the technical scheme of this embodiment, the VoNR+ platform and the virtual human service unit are incorporated into the existing communication network, so that the virtual human video call service can be implemented on the existing call interface on the terminal, and the user does not need to relearn how to use the system. The implementation scheme can adapt to the subsequent evolution route of communication technologies, achieve smooth transition of call services and effectively reduce the impact on the network and terminal users.

The embodiments of the present disclosure will be further explained below with reference to the accompanying drawings.

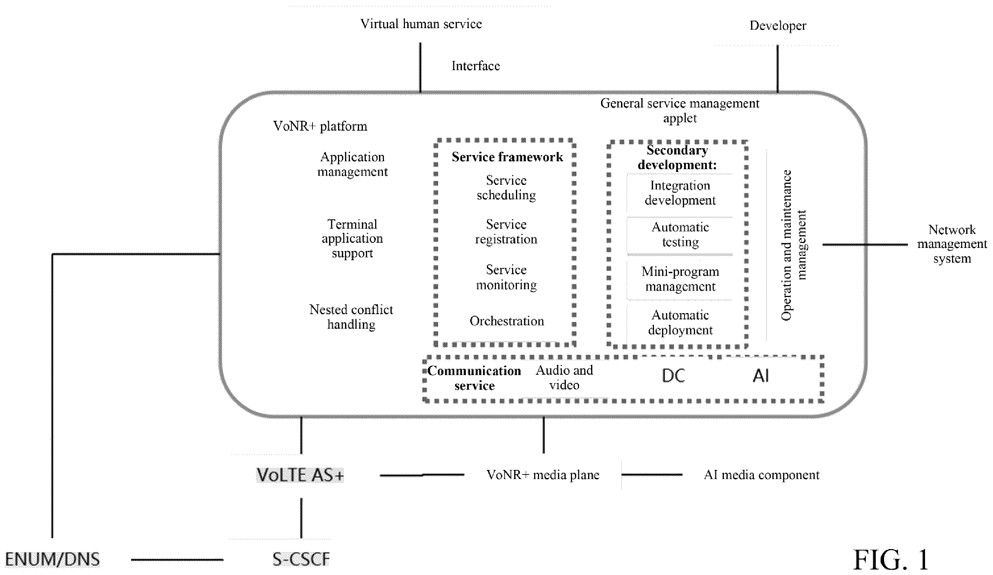

As shown in FIG. 1, FIG. 1 is a schematic diagram of an overall networking architecture for executing a video call control method according to an embodiment of the present disclosure.

In the embodiment shown in FIG. 1, the overall networking architecture for performing the video call control method includes a VoNR+ platform, a virtual human service unit, a developer platform, a network management system, a Voice over Long-Term Evolution Application Server (VOLTE AS+) module, a scheme Voice over New Radio (VoNR+) media plane of 5G network, an Artificial Intelligence (AI) media component, a Call Session Control Function (CSCF) unit, and a Telephone Number Mapping working group/Domain Name System (ENUM/DNS) unit. The VoNR+ platform is respectively connected to the virtual human service unit, the developer platform, the network management system, the VoNR+ media plane, the VOLTE AS+ module and the ENUM/DNS unit. The VoNR+ media plane is respectively connected to the AI media component and the Call Session Control Function unit. The Call Session Control Function is respectively connected to the VOLTE AS+ and the ENUM/DNS unit.

Herein, the VoNR+ platform includes an application management unit, a terminal application support unit, a nested conflict handling unit, a service framework module, a custom-made development module, a general service management applet, an operation and maintenance management unit, and a communication service module. The service framework module includes a service scheduling unit, a service registration unit, a service monitoring unit and an orchestration unit. The custom-made development module includes an integration development unit, an automatic testing unit, a mini-program management unit and an automatic deployment unit. The communication service module includes an audio and video unit, a data transmission DC channel, and an Artificial Intelligence (AI) unit.

In an embodiment, the virtual human service unit is configured to receive a subscriber call event reported by the VoLTE AS+ platform and start the virtual human service. The VoNR+ media plane is controlled by the audio and video unit in the communication service module of the VoNR+ platform to complete the media negotiation, media anchoring and media stream duplication actions for terminal users. The AI media component is controlled via the VoNR+ platform to complete the encoding, decoding, translation, and transcription of the media stream of the terminal user. At the same time, animated images in the video streams of the user are recognized and replaced with the user's preset virtual avatar image, thereby completing the entire process of the virtual human service.

It should be noted that the virtual human service unit simultaneously supports two types of terminals based on the video call technology and the IMS DC technology, respectively, and simultaneously provides the virtual human service to both types of terminals according to user terminal information reported by the VoNR+ platform.

Function of main modules of VoNR+ platform: the service framework module provides basic component units of a microservice architecture; the communication service module has an interface adapted to external capability systems and a processing logic of the service module inside the real-time communication platform, and provides a microservice calling API interface for accessing and calling other services; and the custom-made development module is configured to provide developers with integration development, automatic testing and automatic deployment modules for new call service applications.

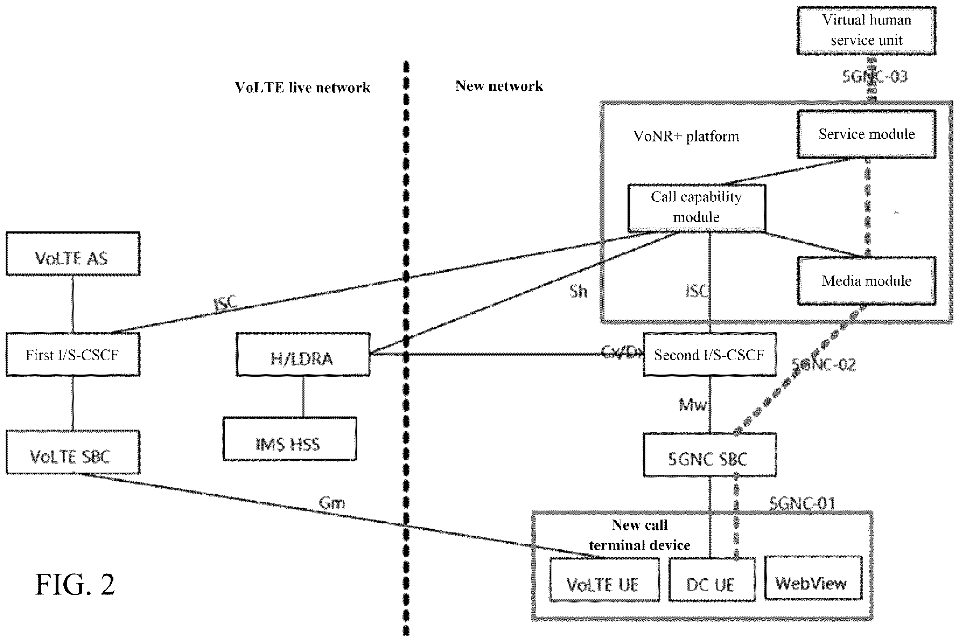

As shown in FIG. 2, FIG. 2 is a schematic diagram of a network composed of network elements for executing a video call control method according to an embodiment of the present disclosure. The network of FIG. 2 includes a VoLTE AS network element, a first Inquiry/Service Call Session Control Function (I/S-CSCF) network element, a VoLTE Session Border Controller (SBC) network element, a High/Low Diameter Routing Agent (H/LDRA) network element, an IP Multimedia Subsystem-Home Subscriber Server (IMS HSS) network element, a VoNR+ platform, a virtual human service unit, a second I/S-CSCF network element, a 5GNC SBC network element, a VoLTE UE and a DC UE. The VoLTE AS network element, the first I/S-CSCF network element, the VoLTE SBC network element, the H/LDRA network element and the IMS HSS network element are network elements in the existing VoLTE network. The VoLTE AS network element, the I/S-CSCF network element and the VoLTE SBC network element are sequentially connected through an information exchange channel. The H/LDRA network element and the IMS HSS network element are connected through an information exchange channel. The VoLTE SBC network element and the VoLTE UE are connected through an information exchange channel. In the present disclosure, the VoNR+ platform, the virtual human service unit, the second I/S-CSCF network element and the 5GNC SBC network element are the modified network structures based on the existing VoLTE network in order to implement the virtual human service. The VoNR+ platform includes a call capability module, a service platform module and a media module. The call capability module establishes information exchange channels with the first I/S-CSCF network element, the H/LDRA network element, the second I/S-CSCF network element, the service platform module, and the media module, respectively. The second I/S-CSCF network element and the H/LDRA network element are connected through an information exchange channel. The virtual human service unit, the service platform module, the media module, the 5GNC SBC network element and the DC UE are sequentially connected through a data transmission channel. It should be noted that the VoLTE UE refers to a terminal device that does not support a data channel, and the DC UE refers to a terminal device that supports a data channel. The VoLTE UE and the DC UE may have other functions. This embodiment does not impose specific limitations on this.

The network in FIG. 2 is a modification on the basis of the networking architecture in FIG. 1, mainly for the communication service side and the terminal device side. The modification includes, but is not limited to, the following explanatory contents:
1) modifying the VoNR+ media plane and AI media component in FIG. 1 to obtain a media module that supports translation and transcription, background blurring, background replacement, avatar replacement, and animated image recognition;
2) modifying the VoLTE AS+ module in FIG. 1 to enhance the call capability of the VoLTE AS+ module, resulting in a call capability module that supports media negotiation, media anchoring, and media duplication;
3) modifying the audio and video unit in the communication service module of FIG. 1 to enable the audio and video unit to support the access capability of virtual human service AS;
4) upgrading the existing terminal device by adding a data protocol stack and a webview component; and
5) modifying the VoLTE SBC network element by adding a data transmission channel (Data Channel).

Based on the network composed of the VoLTE SBC network element configured to execute the video call control method in FIG. 1 and the network elements configured to execute the video call control method in FIG. 2, the following presents various embodiments of the video call control method proposed in the present disclosure for addressing the issues mentioned in the previous embodiments.

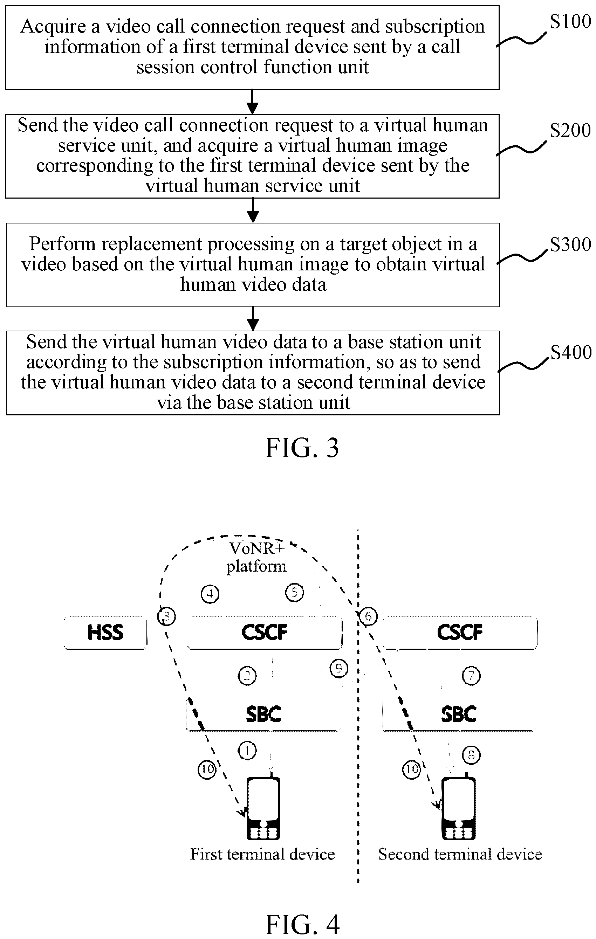

As shown in FIG. 3, FIG. 3 is a flowchart of a video call control method according to an embodiment of the present disclosure. The video call control method according to the embodiment of the present disclosure is applied to a VoNR+ platform, and may include, but is not limited to, a step S100, a step S200, and a step S300.

At the step S100, a video call connection request and subscription information of a first terminal device sent by a call session control function unit is acquired.

In some embodiments, when the first terminal device has to initiate a VoNR+ communication with the second terminal device, the first terminal device may send a video call connection request to the base station unit. The base station unit then forwards this video call connection request to the call session control function unit. The call session control function unit queries the subscription information from the home subscriber server based on the video call connection request, and generates a video call connection request based on the video call connection request. Subsequently, the call session control function unit sends the video call connection request of the first terminal device along with the subscription information to the VoNR+ platform, and then the VoNR+ platform receives the video call connection request and subscription information.

It should be noted that the first terminal device may be a calling terminal device or a called terminal device, and this embodiment does not impose specific limitations. It should be understood that when the first terminal device is the calling terminal device, the second terminal device is the called terminal device; or when the first terminal device is the called terminal device, the second terminal device is the calling terminal device.

At the step S200, the video call connection request is sent to a virtual human service unit, and a virtual human image corresponding to the first terminal device sent by the virtual human service unit is acquired.

In some embodiments, the VoNR+ platform sends the video call connection request to the virtual human service unit. The virtual human service unit queries a preset correspondence table between virtual human image and terminal device to obtain the virtual human image corresponding to the first terminal device based on the video call connection request, and sends the virtual human image corresponding to the first terminal device to the VoNR+ platform. At this point, the VoNR+ platform receives the virtual human image corresponding to the first terminal device sent by the virtual human service unit.

At the step S300, a replacement processing is performed on a target object in a video based on the virtual human image to obtain virtual human video data.

In some embodiments, after the virtual human image is received, the replacement processing is performed on the target object in the video generated by the video call between the first terminal device and the second terminal device, so that the target object in the video is replaced with the virtual human image to obtain virtual human video data including the virtual human image.

At the step S400, the virtual human video data is sent to a base station unit according to the subscription information, thereby sending the virtual human video data to a second terminal device via the base station unit.

In some embodiments, the VoNR+ platform determines a base station unit connected to the second terminal device according to the subscription information, and sends the virtual human video data to the base station unit to transmit the virtual human video data to the second terminal device via the base station unit, so that the virtual human image of the first terminal device can be displayed in the video of the video call between the second terminal device and the first terminal device. The virtual human video call service can be realized in a call interface of the second terminal device. The user is not required to relearn how to use the system. The implementation scheme can adapt to the subsequent evolution route of communication technologies, achieve smooth transition of call services and effectively reduce the impact on the network and terminal users.

In an embodiment, the method includes acquiring a video call connection request of a first terminal device sent by a call session control function unit; sending the video call connection request to a virtual human service unit, and acquiring a virtual human image corresponding to the first terminal device sent by the virtual human service unit; performing a replacement processing on a target object in a video based on the virtual human image to obtain virtual human video data; and sending the virtual human video data to a base station unit, so as to send the virtual human video data to a second terminal device via the base station unit. In the technical scheme of this embodiment, the VoNR+ platform and the virtual human service unit are incorporated into the existing communication network, so that the virtual human video call service can be implemented on the existing call interface on the terminal. The user is not required to relearn how to use the system. The implementation scheme can adapt to the subsequent evolution route of communication technologies, achieve smooth transition of call services and effectively reduce the impact on the network and terminal users.

In an embodiment, referring to FIG. 4, the calling terminal device initiates a video call connection request to a first base station unit. The first base station unit forwards this video call connection request to the call session control function unit. The call session control function unit queries the subscription information from the home subscriber server based on the video call connection request, and generates a video call connection request based on the video call connection request. Subsequently, the call session control function unit sends the video call connection request of the first terminal device along with the subscription information to the VoNR+ platform. The VoNR+ platform sends the video call connection request to the virtual human service unit. The virtual human service unit queries a preset correspondence table between virtual human image and terminal device to obtain the virtual human image corresponding to the first terminal device based on the video call connection request, and sends the virtual human image corresponding to the first terminal device to the VoNR+ platform. The VoNR+ platform performs the replacement processing on the target object in the video generated by the video call between the first terminal device and the second terminal device, and the target object in the video is replaced with the virtual human image to obtain virtual human video data including the virtual human image. The VoNR+ platform issues the video call connection request to a service call session control function unit, and the service call session control function unit routes the call to the called home session control function unit. The called home session control function unit forwards the video call connection request to the second base station unit on the called side, addressing the called user using standard VoLTE calling. The second base station unit on the called side then forwards the video call connection request to the called second terminal device. The second terminal device then rings, and after the call is answered, the VoNR+ platform completes media negotiation for the video call between the calling and called terminal devices, thereby sending the virtual human video data to both the first terminal device and the second terminal device. The first calling terminal device starts a voice call, activates a simultaneous interpretation feature, and duplicates the media stream to automatic speech recognition technology for speech recognition. After obtaining the transcribed text, the first calling terminal device overlies the transcribed text onto the virtual human video data for playback to the user.

It should be noted that, the first terminal device may be provided with the virtual human service while the second terminal device is not provided with the virtual human service, so virtual human video data is generated only for the video stream of the first terminal device. Alternatively, the first terminal device and the second terminal device may be both be provided with the virtual human service, so virtual human video data has to be generated for the video streams of both the first terminal device and the second terminal device. Alternatively, the second terminal device may be provided with the virtual human service while the first terminal device is not provided with the virtual human service, so virtual human video data is generated only for the video stream of the second terminal device. This embodiment does not impose specific limitations on this.

It should be noted that the video call control method of the present embodiment may be used in a video call scenario of three or more users in addition to a dual-user video call scenario. This embodiment does not impose specific limitations on this.

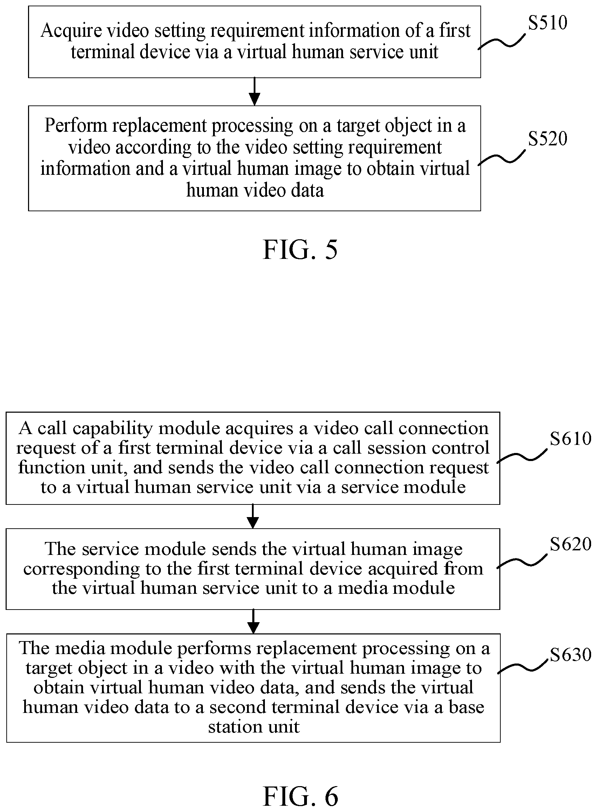

As shown in FIG. 5, FIG. 5 is a flowchart of a video call control method according to another embodiment of the present disclosure. The step S300 includes, but is not limited to, a step S510 and a step S520.

At the step S510, video setting requirement information of a first terminal device is acquired via a virtual human service unit.

At the step S520, the replacement processing is performed on a target object in a video according to the video setting requirement information and a virtual human image to obtain virtual human video data.

In some embodiments, before the video call, the first terminal device has to configure virtual human service-related information in the virtual human service unit. The information to be configured includes at least one of: a virtual human image to be uploaded/selected, an object to be replaced by the virtual human image, whether a background of a video is blurred, whether the virtual human service is in a static or dynamic mode, etc. In response to receiving the setting information of the first terminal device, the virtual human service unit generates the video setting requirement information corresponding to the first terminal device. Therefore, after the first terminal device initiates the video call connection request, the VoNR+ platform may acquire video setting requirement information of the first terminal device via the virtual human service unit, and the replacement processing is performed on a target object in a video according to the video setting requirement information and a virtual human image to obtain virtual human video data.

In an embodiment, the VoNR+ platform may determine the target object, which is a background and/or a head image in the video, to be replaced in the video according to the video setting requirement information; and perform the replacement processing on the target object based on the virtual human image to obtain virtual human video data. That is, the VoNR+ platform may partially or completely replace the images in the video according to the video setting requirement information corresponding to the first terminal device. This embodiment does not impose specific limitations on this.

As shown in FIG. 6, FIG. 6 is a flowchart of a video call control method according to another embodiment of the present disclosure. The VoNR+ platform includes a service module, a call capability module and a media module. The video call control method includes, but is not limited to, a step S610, a step S620, and a step S630.

At the step S610, the call capability module acquires a video call connection request of a first terminal device via a call session control function unit, and sends the video call connection request to a virtual human service unit via the service module.

At the step S620, the service module sends the virtual human image corresponding to the first terminal device acquired from the virtual human service unit to the media module.

At the step S630, the media module performs a replacement processing on a target object in a video with the virtual human image to obtain virtual human video data, and sends the virtual human video data to a second terminal device via a base station unit.

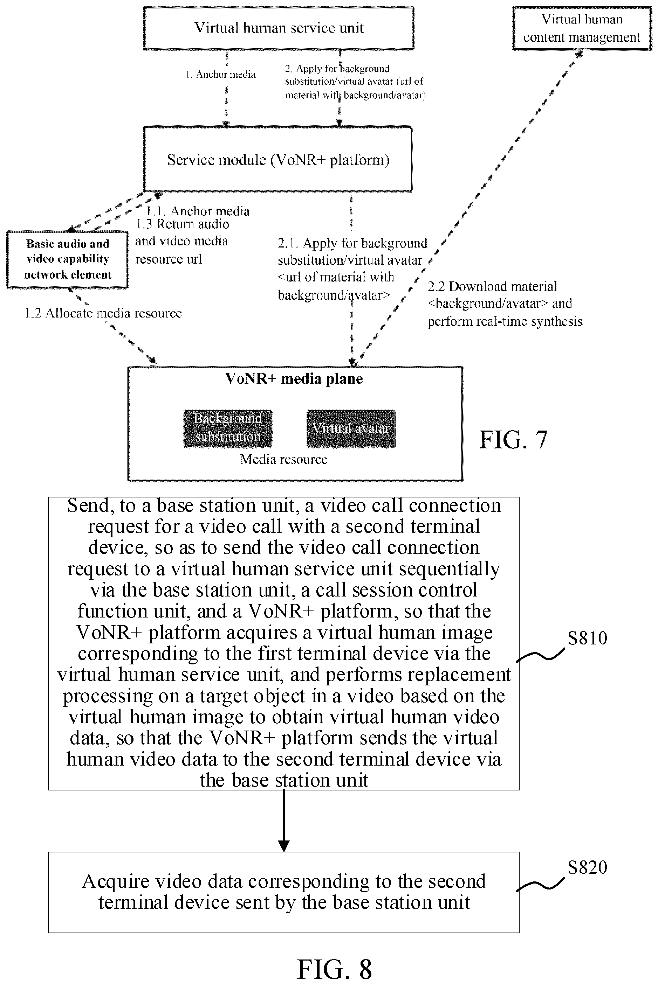

In an embodiment, referring to FIG. 7, the first calling terminal device initiates a video call connection request to the second terminal device, and receives a respond from the second terminal device. The call capability module acquires the video call connection request of the first terminal device via a call session control function unit, and sends the video call connection request to the virtual human service unit via the service module. Then, the call capability module anchors an audio and video stream to the VoNR+ media plane of the media module based on the instruction from the virtual human service unit/service module (VoNR+ platform), and returns an audio and video media resource URL of the VoNR+ media plane of the media module after the anchoring is completed. Since the first terminal device has configured the background or virtual avatar before the call, the virtual human service unit determines the video setting requirement information, and instructs the service module (VoNR+ platform) to start the background replacement or virtual avatar replacement, and carry the background or virtual avatar ID. The service module (VoNR+ platform) notifies the VoNR+ media plane of the media module to start the background replacement or virtual avatar replacement, and carry the background or virtual avatar ID. The VoNR+ media plane of the media module replaces the video background or head image with the designated background or virtual avatar.

In an embodiment, after the replacement is completed, the first terminal device may also set a blurred background via DTMF, and the VoNR+ media plane of the media module reports the detected DTMF result to the service module (VoNR+ platform). The service module (VoNR+ platform) reports the DTMF result to the virtual human service unit. The virtual human service unit instructs the VoNR+ platform/VoNR+ media plane to execute a setting result prompting process. The virtual human service unit instructs the service module (VoNR+ platform) to perform background blurring processing, or the service module (VoNR+ platform) instructs the VoNR+ media plane to perform background blurring processing on the local video stream, such that the virtual human avatar of the user appears more prominent.

As shown in FIG. 8, FIG. 8 is a flowchart of a video call control method according to another embodiment of the present disclosure. The video call control method according to this embodiment of the present disclosure is applied to a first terminal device, and may include, but is not limited to, a step S810 and a step S820.

At the step S810, a video call connection request for a video call with a second terminal device is sent to a base station unit. The video call connection request is in turn sent to a virtual human service unit sequentially via the base station unit, a call session control function unit, and a VoNR+ platform, so that the VoNR+ platform acquires a virtual human image corresponding to the first terminal device via the virtual human service unit, and performs a replacement processing on a target object in a video based on the virtual human image to obtain virtual human video data. Then, the VoNR+ platform sends the virtual human video data to the second terminal device via the base station unit.

At the step S820, video data corresponding to the second terminal device sent by the base station unit is acquired.

In some embodiments, the calling terminal device initiates a video call connection request to a first base station unit. The first base station unit forwards this video call connection request to the call session control function unit. The call session control function unit queries the subscription information from the home subscriber server based on the video call connection request, and generates a video call connection request based on the video call connection request. Subsequently, the call session control function unit sends the video call connection request of the first terminal device along with the subscription information to the VoNR+ platform. The VoNR+ platform sends the video call connection request to the virtual human service unit. The virtual human service unit queries a preset correspondence table between virtual human image and terminal device to obtain a virtual human image corresponding to the first terminal device based on the video call connection request, and sends the virtual human image corresponding to the first terminal device to the VoNR+ platform. The VoNR+ platform performs the replacement processing on the target object in the video generated by the video call between the first terminal device and the second terminal device, and the target object in the video is replaced with the virtual human image to obtain virtual human video data including the virtual human image. The VoNR+ platform issues the video call connection request to the service call session control function unit, and the service call session control function unit routes the call to the called home session control function unit. The called home session control function unit forwards the video call connection request to a second base station unit on the called side, for addressing the called user using standard VoLTE calling. The second base station unit on the called side then forwards the video call connection request to the called second terminal device. The second terminal device then rings, and after the call is answered, the VoNR+ platform completes media negotiation for the video call between the calling and called terminal devices, thereby sending the virtual human video data to both the first terminal device and the second terminal device via the base station units corresponding to the first terminal device and the second terminal device.

Before the step S810, the first terminal device has to configure virtual human service-related information in the virtual human service unit. For example, the virtual human image and number information of the first terminal device are sent to the virtual human service unit. In another example, the virtual human image, the number information of the first terminal device and video setting requirement information are sent to the virtual human service unit. Herein, the video setting requirement information includes one of: replacing a head image in a video with the virtual human image; replacing a background in a video with the virtual human image; replacing a head image in a video with the virtual human image, and blurring a background in the video; and replacing a head image in a video with the virtual human image, and applying motion effects to a virtual human head image after the replacement.

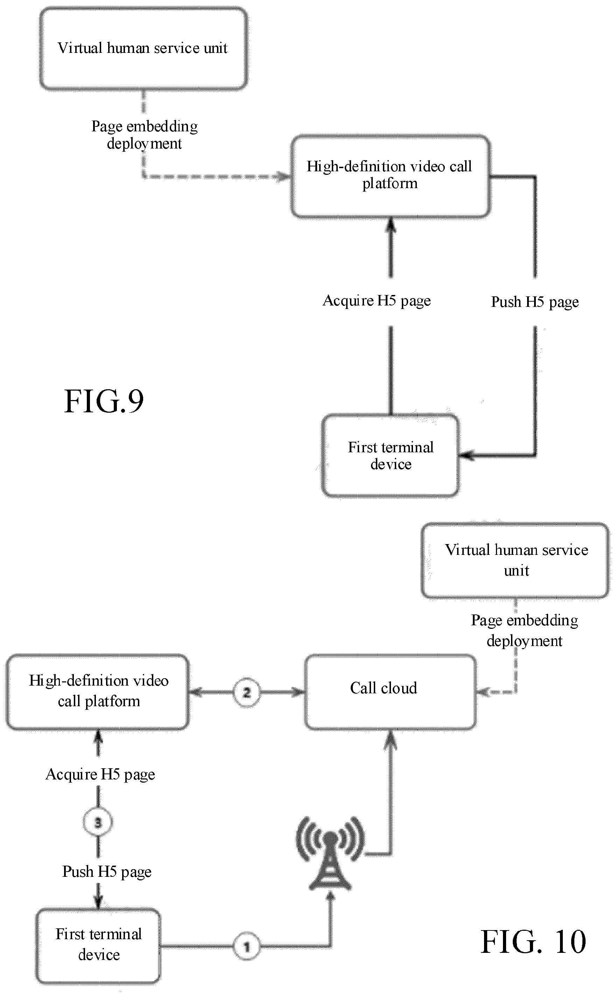

In an embodiment, referring to FIG. 9, the video setting requirement information indicates to replace a head image in a video with the virtual human image to realize a static virtual human service. Firstly, a virtual human applet is triggered by opening a 5G New Call applet tray on a first terminal device Then, the homepage of a virtual human applet is opened. The homepage includes effects of the virtual human and voice announcements. When a user clicks on a service content link on the first terminal device to navigate to a virtual human image selection page, a virtual human image may be chosen to fill into the video stream for completing the functionality of the virtual human, along with the accompanying voice announcement effects.

In an embodiment, referring to FIG. 10, the video setting requirement information indicates to replace a head image in a video with the virtual human image, and apply motion effects to a virtual human head image after the replacement to realize a dynamic virtual human service. Firstly, a third-party call cloud process can be introduced to allow a user to dial into the third-party call cloud through a first terminal device, thereby triggering the virtual human service and initiating a video call. The third-party call cloud establishes a(an) audio/video/DC channel with the VoNR+ platform. During the call, a cloud H5 page is issued. The H5 page inherits the static virtual human functionality, adds a dynamic virtual human service, introduces background replacement and animated media recognition capabilities. Once the first terminal device receives the H5 page, the first terminal device interacts with the virtual human service unit. Based on the virtual human avatar chosen by the user, the virtual human service unit encodes and decodes a video stream of the user while identifying the position of the user's face on the screen. The virtual human avatar is then scaled to the same size as the user's face and replaces the user's face using image replacement techniques. Subsequently, the virtual human avatar will recognize the direction and amplitude of the user's head movements, allowing it to match and follow, thus achieving the dynamic virtual human service.

In an embodiment, the virtual human service can inter-operate across different terminal devices. In a case where the second terminal device is a terminal device which supports a data channel, the VoNR+ platform sends the virtual human video data to the second terminal device through a data transmission channel via the base station unit. Alternatively, in a case where the second terminal device is a terminal device which does not support data channel, the VoNR+ platform performs a format conversion processing on the virtual human video data via the base station unit, and sends the virtual human video data subjected to the format conversion processing to the second terminal device through a video transmission channel.

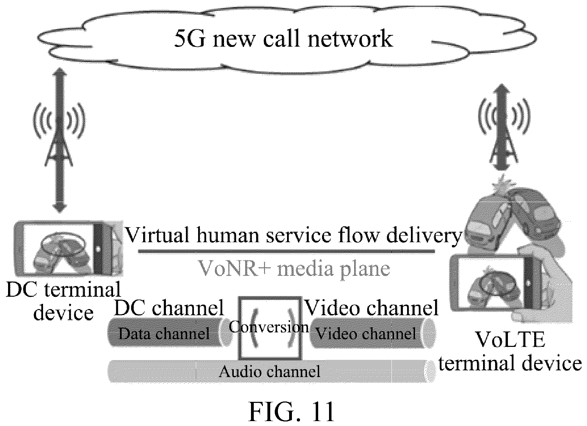

In an embodiment, referring to FIG. 11, in a scenario where a virtual human service call is implemented between a DC terminal device and a non-DC terminal device (VoLTE terminal device), a DC channel is established between the DC terminal device and the network, and a real-time video streaming channel (RTP over UDP) is established between the non-DC terminal device (VoLTE terminal device) and the network. The network associates the two transmission channels and performs format conversion on the data in one channel before transmitting the data in the other channel, thereby enabling the transmission of interactive data between DC terminal device and non-DC terminal device (VoLTE terminal device).

In addition, an embodiment of the present disclosure provides a communication device, including: a processor and a memory. The processor and the memory may be connected by a bus or other means, and the present embodiment takes a bus connection as an example.

As a non-transitory computer-readable storage medium, the memory can be configured to store a non-transitory software program and a non-transitory computer-executable program. In addition, the memory may include a high-speed random access memory and a non-transitory memory, for example, at least one of magnetic disk storage device, flash memory device, or another non-transitory solid-state storage device. In some implementations, the memory may include a memory remotely located with respect to the processor, and this remote memory may be connected to the processor via a network. Examples of the above-mentioned network include, but are not limited to, the Internet, an intranet, a local area network, a mobile communication network, and a combination thereof.

Those having ordinary skill in the art can understand that the communication device can be applied to a 5G communication network system, a subsequent evolved mobile communication network system, etc., which is not specifically limited in this embodiment.

Those having ordinary skill in the art may understand that the communication device of this embodiment does not constitute a limitation on embodiments of the present disclosure, and there may be more or fewer components than illustrated, or some of the components may be combined, or a different arrangement of the components may be provided.

The non-transitory software program and instructions required for implementing the video call control method of the above-described embodiments are stored in the memory. When executed by the processor, the non-transitory software program and instructions cause the processor to perform the video call control method of the above-described embodiments, for example, to perform the steps S100 to S400 in FIG. 3, the steps S510 to S520 in FIG. 5, the steps S610 to S630 in FIG. 6, and the steps S810 to S820 in FIG. 8 described above.

Furthermore, an embodiment of the present disclosure also provides a computer-readable storage medium storing computer-executable instructions for performing the video call control method described above, for example, performing the steps S100 to S400 in FIG. 3, the steps S510 to S520 in FIG. 5, the steps S610 to S630 in FIG. 6, and the steps S810 to S820 in FIG. 8 described above.

An embodiment of the present disclosure includes: acquiring a video call connection request of a first terminal device sent by a call session control function unit; sending the video call connection request to a virtual human service unit, and acquiring a virtual human image corresponding to the first terminal device sent by the virtual human service unit; performing a replacement processing on a target object in a video based on the virtual human image to obtain virtual human video data; and sending the virtual human video data to a base station unit, so as to send the virtual human video data to a second terminal device via the base station unit. In the technical scheme of this embodiment, the VoNR+ platform and the virtual human service unit are incorporated into the existing communication network, and the virtual human video call service can be implemented on the existing call interface on the terminal. The user is not required to relearn how to use the system. The implementation scheme can adapt to the subsequent evolution route of communication technologies, achieve smooth transition of call services and effectively reduce the impact on the network and terminal users.

It can be understood by those having ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to random access memory (RAM), read-only memory (ROM), electrically erasable programmable read-only memory (EEPROM), flash memory or other memory techniques, compact disc read-only memory (CD-ROM), digital versatile disk (DVD) or other optical disk storage, magnetic cassette, magnetic tape, magnetic disk storage or other magnetic storage devices, or any other medium that can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information delivery media.

The above is a description of some embodiments of the present disclosure. However, the present disclosure is not limited to the above-mentioned embodiments. Those having ordinary skill in the art can also make various equivalent modifications or replacements without departing from the range of the present disclosure, and these equivalent modifications or replacements are all included in the scope defined by the claims of the present disclosure.

## Claims

1. A video call control method, performed by a Voice over New Radio, VoNR+, platform set up within a communication network, the VoNR+ platform being respectively connected to a virtual human service unit, a call session control function unit and a base station unit in the communication network, the method comprising:
acquiring a video call connection request of a first terminal device sent by the call session control function unit;
sending the video call connection request to the virtual human service unit, and acquiring a virtual human image corresponding to the first terminal device sent by the virtual human service unit;
performing a replacement processing on a target object in a video based on the virtual human image to obtain virtual human video data; and
sending the virtual human video data to the base station unit, so as to send the virtual human video data to a second terminal device via the base station unit.

2. The video call control method of claim 1, wherein performing a replacement processing on a target object in a video according to the virtual human image to obtain virtual human video data comprises:
acquiring video setting requirement information of the first terminal device via the virtual human service unit; and
performing the replacement processing on the target object in the video according to the video setting requirement information and the virtual human image to obtain the virtual human video data.

3. The video call control method of claim 2, wherein performing the replacement processing on the target object in the video according to the video setting requirement information and the virtual human image to obtain the virtual human video data comprises:
determining the target object to be replaced in the video according to the video setting requirement information, wherein the target object is a background and/or a head image in the video; and
performing the replacement processing on the target object according to the virtual human image to obtain the virtual human video data.

4. The video call control method of claim 2, wherein performing the replacement processing on the target object in the video according to the video setting requirement information and the virtual human image to obtain the virtual human video data comprises:
according to the video setting requirement information, performing the replacement processing on a head image in the video with the virtual human image, and performing a blurring processing on a background in the video, to obtain the virtual human video data.

5. The video call control method of claim 1, wherein the VoNR+ platform comprises a service module, a call capability module and a media module, and the method comprises:
acquiring, by the call capability module, the video call connection request of the first terminal device via the call session control function unit, and sending, by the call capability module, the video call connection request to the virtual human service unit via the service module;
sending, by the service module, the virtual human image corresponding to the first terminal device acquired from the virtual human service unit to the media module; and
performing, by the media module, the replacement processing on the target object in the video with the virtual human image to obtain the virtual human video data, and sending, by the media module, the virtual human video data to the second terminal device via the base station unit.

6. The video call control method of claim 1, wherein sending the virtual human video data to the base station unit, so as to send the virtual human video data to a second terminal device via the base station unit comprises:
in response to the second terminal device being a terminal device which supports a data channel, sending the virtual human video data to the base station unit, so as to send the virtual human video data to the second terminal device through a data transmission channel via the base station unit;
or, in response to the second terminal device being a terminal device which does not support data channel, sending the virtual human video data to the base station unit to perform a format conversion processing on the virtual human video data via the base station unit, and sending the virtual human video data subjected to the format conversion processing to the second terminal device through a video transmission channel.

7. A video call control method, performed by a first terminal device connected to a communication network comprising a Voice over New Radio (VoNR+) platform, a virtual human service unit, a call session control function unit and a base station unit, wherein the virtual human service unit, the call session control function unit and the base station unit are connected to the VoNR+ platform, the method comprising:
sending, to the base station unit, a video call connection request for a video call with a second terminal device, in turn sending the video call connection request to the virtual human service unit sequentially via the base station unit, the call session control function unit, and the VoNR+ platform, so that the VoNR+ platform acquires a virtual human image corresponding to the first terminal device via the virtual human service unit, performs a replacement processing on a target object in a video based on the virtual human image to obtain virtual human video data, and sends the virtual human video data to the second terminal device via the base station unit; and
acquiring video data corresponding to the second terminal device sent by the base station unit.

8. The video call control method of claim 7, wherein before sending, to the base station unit, a video call connection request for a video call with a second terminal device, the method further comprises:
sending the virtual human image and number information of the first terminal device to the virtual human service unit.

9. The video call control method of claim 8, wherein sending the virtual human image and number information of the first terminal device to the virtual human service unit comprises:
sending the virtual human image, the number information of the first terminal device and video setting requirement information to the virtual human service unit.

10. The video call control method of claim 9, wherein the video setting requirement information comprises one of:
replacing a head image in the video with the virtual human image;
replacing a background in the video with the virtual human image;
replacing a head image in the video with the virtual human image, and blurring a background in the video; or
replacing a head image in the video with the virtual human image, and applying motion effects to a virtual human head image after the replacement.

11. The video call control method of claim 7, wherein the VoNR+ platform sending the virtual human video data to the second terminal device via the base station unit comprises:
in response to the second terminal device being a terminal device which supports a data channel, sending, by the VoNR+ platform, the virtual human video data to the second terminal device through a data transmission channel via the base station unit;
or, in response to the second terminal device being a terminal device which does not support data channel, performing, by the VoNR+ platform, a format conversion processing on the virtual human video data via the base station unit, and sending the virtual human video data subjected to the format conversion processing to the second terminal device through a video transmission channel.

12. A communication device, comprising: a memory, a processor, and a computer program stored on the memory and executable by the processor, wherein the computer program, when executed by the processor, causes the processor to implement the video call control method of any one of claims 1 to 6, or the video call control method of any one of claims 7 to 11.

13. A computer-readable storage medium storing computer-executable instructions, wherein the computer-executable instructions are configured to cause a computer to implement the video call control method of any one of claims 1 to 6 or the video call control method of any one of claims 7 to 11.
